# EUROPEAN PATENT APPLICATION

(11) **EP 4 682 058 A1**
(43) Date of publication of application: **21.01.2026**
(21) Application number: 24382762.3
(22) Date of filing: 15.07.2024
(51) Int. Cl.: B64D 45/02, B29C 65/00, B64C 1/12

(54) **AIRCRAFT ELECTRICAL CONNECTION SYSTEM**

(71) Applicant: Airbus Operations, S.L.U., 28906 Getafe, Madrid (ES)
(72) Inventor: GARCÍA MARTÍNEZ, Valentín, 28906 Getafe (ES); GARCÍA BLANCO, María José, 28906 Getafe (ES); REYES LIZCANO, Rubén, 28906 Getafe (ES); RODRÍGUEZ GÓMEZ, Maria del Carmen, 28906 Getafe (ES); SOLANO LÓPEZ, Pablo, 28906 Getafe (ES)
(74) Representative: Elzaburu S.L.P.

(57) **Abstract**

Aircraft electrical connection system comprising:
- a portion of a metallic element (1) of the aircraft,
- a portion of a composite skin (2) of the aircraft located adjacent to the portion of the metallic element (1),
- a plurality of metallic fastening means (3) joining the composite skin (2) to the metallic element (1), the metallic fastening means (3) being configured to transfer electrical currents from the metallic element (1) to the composite skin (2).

## Description

### Field of the invention

The present invention relates to an electrical connection system of an aircraft. More specifically, it may relate to an aircraft electrical bonding and/or grounding system.

### Background of the invention

The practice of electrically connecting various metallic components within an aircraft to minimize differences in electrical potential and even prevent the buildup of static electricity is known. It helps to ensure electrical continuity and equalizes the electrical potential among and between different metallic components.

In particular, among the applications for the electrical connection of different elements, bonding and grounding are known.

Bonding is used to safely carry the fault currents, avoiding damaging the structure and also to reduce the risk of electric shocks to anyone who may touch two separate metal parts when there is a fault somewhere in the supply of electrical installation. By connecting bonding conductors between particular parts, the voltage that may be present is reduced.

Electrical grounding, which is an electrical connection to the ground to ensure the return of functional power currents, back to the point of voltage reference and/or to ensure the return of functional signal current between equipment. It
primarily provides a measure of safety against electric shocks by acting as a safety line to redirect electric current in the event of short circuits.

In aircraft construction, composite materials offer improved strength to weight ratio compared to aluminum. However, composite materials, compared to metallic materials, exhibit high electrical resistance and minimize bonding, earth returns, and lightning strike dissipation. This lack of electrical conductivity requires improving the material itself or adding additional elements that integrates a ground plane into the composite skin of the aircraft.

Known systems are related with the improvement of the composite material itself, by being doped with nanoparticles or metallic elements for transferring currents.

It is also known to use metallic strips that are fastened to the composite material and fastened and bonded to other metallic strips. The mentioned fasteners do not have any functionality apart from fixing the strip to the composite material. Therefore, they introduce additional weight, and their installation is time consuming. In addition, the fasteners located between consecutive metallic strips, as previously stated, involve a time consuming activity, as the area needs to be cleaned and the junction needs to be sealed with a sealant and a varnish. All these tasks are performed manually.

### Summary of the invention

It is an object of the invention an aircraft electrical connection system comprising:
- a portion of a metallic element of the aircraft,
- a portion of a composite skin of the aircraft located adjacent to the portion of the metallic element,
- a plurality of metallic fastening means joining the composite skin to the metallic element, the metallic fastening means being configured to transfer electrical currents from the metallic element to the composite skin.

A portion has to be understood as a part or section of a metallic or composite element of an aircraft that which, when combined with the other parts or sections of the metallic or composite elements, constitutes the complete metallic or composite component.

A metallic element of an aircraft is an element where systems can be electrically attached to. In particular, it can be a metallic frame of an aircraft.

The metallic element can be made entirely of metal, and the current is distributed among the plurality of metallic fastening elements. Alternatively, the metallic element can be made of composite and coated with metallic coating so that the current can be distributed among the plurality of metallic fastening elements.

Thus, metallic frame or metallic fastening element means that the element or fastening element is made completely or in part of a metallic material. Thus, the fastening element can be a complete metallic element, or any kind of material coated by a metallic layer, fastened to the composite material of the skin.

According to the above, the current will flow from the metallic/metallized element to the composite skin through the metallic fastening elements.

In an embodiment, the claimed system is able to inject an electrical fault current, for instance, associated to a power supply level current of approximately 50 A, directly into a composite material of the skin. Thus, the invention avoids the use of metallic strips joined by fasteners known in the state of the art. Even, regarding grounding, it would also be possible to remove wires in the aircraft as the system is able to continuously inject this aforementioned 50A injection without damaging the composite: the power return wire can be removed as the current can flow back through the composite, e.g., or vice versa, the power supply wire can be suppressed and as the supply is done through the composite and the return through a cable.

According to the above, the current is injected into the composite skin directly through a plurality of fasteners, for instance, hundred fasteners, which join the metallic element to the composite skin. Significant levels of current are injected into the composite material by using a fastening element comprising metallic material. Depending on the level of current that can be injected, more fasteners are needed to transfer that current to the composite material.

Compared with the state of the art, the claimed invention reduces the weight and the cost of the aircraft, fulfilling the technical requirements.

The claimed invention, as opposed to known systems related to an improvement of the composite material itself by being doped with nanoparticles or metallic elements for transferring currents, makes use of standard composite skins commonly used in aircrafts, without any kind of carbon/metallic doping.

It is also an object of the present invention an aircraft comprising a metallic element, for instance, a frame and a composite skin located adjacent to the metallic element, the aircraft comprising an electrical connection system according to the above.

### Description of the figures

To complete the description and to provide for a better understanding of the invention, a set of drawing is provided. Said drawings form an integral part of the description and illustrate preferred embodiments of the invention. The drawings comprise the following figure.
Figure 1 shows a portion of a metallic frame and a portion of a composite skin and a scheme of the current path according to an embodiment of the invention. The current flows from an electrical equipment to a metallic frame to the skin via fasteners.

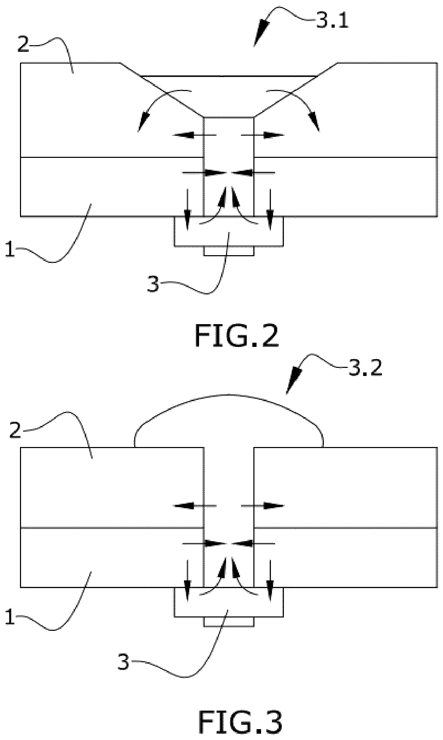

Figure 2 shows a detail of a current distribution from the metallic frame to the composite skin of an embodiment formed by countersunk fasteners.
Figure 3 shows the detail of the current distribution of another embodiment in which the fastening elements are protruding fasteners.

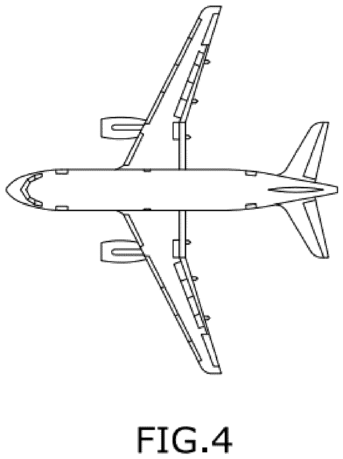

Figure 4 shows an aircraft.

### Detailed description of the invention

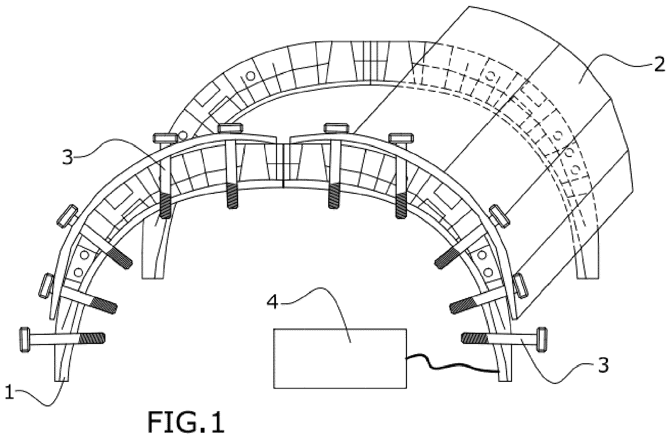

Figure 1 shows an embodiment of how the current would flow from an electrical equipment into the structure via fasteners.

The electrical connection system comprises:
- a portion of a metallic element (1), specifically a metallic frame, of an aircraft,
- a portion of a composite skin (2) of the aircraft located adjacent to the portion of the metallic frame,
- a plurality of metallic fastening means (3) joining the composite skin (2) to the metallic frame. The metallic fastening means (3) are configured to transfer electrical currents from the metallic frame to the composite skin (2).

The metallic frame can be made entirely of metallic material or be made of another kind of material and comprises an external metallic foil, for instance, bonded/cured and with or without holes, or with an external metallized layer, so that the current can be spread along the surface of the metallic frame.

The composite skin (2) is made of a composite material, for instance, Carbon fiber reinforced polymer (CFRP), and may optionally incorporate a Lightning Surface Protection (LSP) such as Expanded Copper Foil (ECF) or Perforated Copper Foil (PCF).

As previously stated, the metallic fastening means (3) defines the path through which the current would flow from the metallic element (1) to the composite skin (2).

In an embodiment, the metallic fastening means (3) is a metallic body and/or comprises a metallic coating.

The metallic fastening means (3) can accommodate various coatings, ranging from high-resistivity options like Hi-Kote to conductive ones like IVD (Ion-Vapor Deposition).

The metallic fastening means (3) is of the kind that comprises a head and a shank, the diameter of the shank being at least 3.2 mm. Larger diameters contribute to better conductivity.

The metallic fastening elements (3) may be countersunk fasteners (3.1) or protruding fasteners (3.2) or a mix of them.

The different types of metallic fastening means (3) and the possible current paths can be seen in **¡Error! No se encuentra el origen de la referencia.** and **¡Error! No se encuentra el origen de la referencia..**

In addition, some installation requirements are needed for the correct guidance of the electrical current.

The clearance allowed among fasteners depends on the size of the fastener. For smaller diameter fastener this value would be 57 µm and for larger diameter fasteners would be 73 µm. Thus, the minimum clearance between adjacent metallic fastening means (3) is 57 µm. The lower the clearance, the better the conductivity.

The tightening torque depends on the type of rivet and collar used and their diameter. The minimum value for the smallest rivet used would be 2.5 Nm and the minimum value for the largest rivet would be 38.6 Nm. Thus, the tightening torque of the metallic fastening means (3) is higher than 2.5 Nm.

Apart from the mechanical requirements, the installation could be with or without sealant, i.e., wet or dry installation.

With the above configuration of metallic fastening means (3), it is possible to transfer currents in the range from 1 Amp per fastener to 6 Amps per fastener, depending on the specific coating and size of the fastener, without damaging the structure.

It is also an object of the present invention an aircraft comprising a metallic element (1) and a composite skin (2) located adjacent to the metallic element, the aircraft comprising an electrical connection system according to the any of the above embodiments.

## Claims

1. Aircraft electrical connection system, **characterised in that** comprises:
- a portion of a metallic element (1) of the aircraft,
- a portion of a composite skin (2) of the aircraft located adjacent to the portion of the metallic element (1),
- a plurality of metallic fastening means (3) joining the composite skin (2) to the metallic element (1), the metallic fastening means (3) being configured to transfer electrical currents from the metallic element (1) to the composite skin (2).

2. Aircraft electrical connection system, according to claim 1, wherein the metallic fastening means (3) is a metallic body and/or comprises a metallic coating.

3. Aircraft electrical connection system, according to any preceding claim, wherein the metallic fastening means (3) comprises a high-resistivity coating.

4. Aircraft electrical connection system, according to claim 3, wherein the high-resistivity coating is Hi-Kote.

5. Aircraft electrical connection system, according to claims 1 or 2, wherein the metallic fastening means (3) comprises a conductive coating.

6. Aircraft electrical connection system, according to claim 5, wherein the conductive coating is Ion-Vapor Deposition.

7. Aircraft electrical connection system, according to any preceding claim, wherein the metallic fastening means (3) are countersunk fasteners (3.1) or protruding fasteners (3.2) or a mix of them.

8. Aircraft electrical connection system, according to any preceding claim, wherein the metallic fastening means (3) is a metallic frame of the aircraft.

9. Aircraft electrical connection system, according to any preceding claim, wherein the metallic fastening means (3) comprises a head and a shank, the diameter of the shank being at least 3.2 mm.

10. Aircraft electrical connection system, according to any preceding claim, wherein the tightening torque of the metallic fastening means (3) is higher than 2.5 Nm.

11. Aircraft electrical connection system, according to any preceding claim, wherein the clearance between adjacent metallic fastening means (3) is 57 µm.

12. Aircraft, comprising a metallic element (1) and a composite skin (2) located adjacent to the metallic element (1), the aircraft **characterised in that** it comprises an electrical connection system according to any preceding claim.
